# EUROPEAN PATENT APPLICATION

(11) **EP 1 176 659 A2**
(43) Date of publication of application: **30.01.2002**
(21) Application number: 01117661.7
(22) Date of filing: 25.07.2001
(51) Int. Cl.: H01M 10/40

(54) **Electrolyte for a lithium-sulfur battery and a lithium-sulfur battery using the same**

(30) Priority: 25.07.2000 KR 2000042736; 25.07.2000 KR 2000042737
(71) Applicant: Samsung SDI Co. Ltd., Suwon-shi, Kyonggi-do (KR)
(72) Inventor: Hwang, DuckChul, Cheonan-city, Chungcheongnam-do (KR); Choi, YunSuk, Cheonan-city, Chungcheongnam-do (KR); Choi, SooSeok, Cheonan-city, Chungcheongnam-do (KR); Lee, JeaWoan, Cheonan-city, Chungcheongnam-do (KR); Jung, YongJu, Yuseong-ku, Taejeon-city (KR); Kim, JooSoak, Cheonan-city, Chungcheongnam-do (KR)
(74) Representative: Modiano, Guido, Dr.-Ing.

(57) **Abstract**

An electrolyte for a lithium-sulfur battery having a solvent having a dielectric constant that is greater than or equal to 20, a solvent having a viscosity that is less than or equal to 1.3, and an electrolyte salt. This battery shows excellent capacity and cycle life characteristics.

## Description

### CROSS REFERENCE TO RELATED APPLICATIONS

This application is based on Korean Patent Application Nos. 2000-42736 and 2000-42737 filed in the Korean Industrial Property Office on July 25, 2001, the contents of which are incorporated herein by reference.

### BACKGROUND OF THE INVENTION

### (a) Field of the Invention

The present invention relates to an electrolyte for a lithium-sulfur battery and a lithium-sulfur battery using the same, and more specifically, to an electrolyte for a lithium-sulfur battery prepared by mixing a solvent having a high dielectric constant and a solvent having a low viscosity, and a lithium-sulfur battery using the same.

### (b) Description of the Related Art

Due to the rapid development of portable electronic equipment, there are growing demands for secondary batteries. Recently, coinciding with the trend toward compact, thin, small and light portable electronic equipment, there is growing need for a battery with a high energy density. Thus, it is necessary to develop a battery with good safety, economy, and which is also environmentally-friendly.

Of the batteries satisfying the above requirements, a lithium-sulfur battery is the most useful in terms of energy density. The energy density of lithium is 3830 mAh/g used as a negative active material, and the energy density of sulfur (S₈) used as a positive active material is 1675 mAh/g. These active materials are both cheap and environmentally-friendly. However, there is still little widespread use of the lithium-sulfur battery system.

The reason as to why there is still little widespread use of the lithium-sulfur battery is because of the amount of sulfur used in electrochemical reduction/oxidation (redoxidation) in a battery as compared to the amount of introduced sulfur is very low. That is to say, the sulfur utilization is very low so that there is very low battery capacity when the sulfur is used as active material.

In addition, during redoxidation, the sulfur leaks into the electrolyte so that the cycle life of a battery deteriorates. Also, when a proper electrolyte is not selected, the lithium sulfide (Li₂S) (i.e., the reduced material of sulfur) is deposited so that it can no longer participate in the electrochemical reaction.

U.S. Patent No. 5,961,672 discloses a mixed electrolyte solution of 1,3-dioxolane/diglyme/sulforane/dimethoxyethane in a ratio of 50/20/10/20 comprising 1M of LiSO₃CF₃ in order to improve the cycle life and safety, and a negative electrode of lithium metal coated with a polymer.

U.S. Patent Nos. 5,523,179, 5,814,420, and 6,030,720 suggest technical improvements to solve the above-noted problems. U.S. Patent No. 6,030,720 discloses a mixed solvent comprising a main solvent having a general formula R₁(CH₂CH₂O)ₙR₂ (where n ranges between 2 and 10, and R₁ and R₂ are different or identical alkyl or alkoxy groups) and a cosolvent having a donor number of at least about 15. Also, the above patent uses a liquid electrolyte solvent comprising at least one donor solvent such as a crown ether or a cryptand, and eventually the electrolyte turns to a catholyte after discharging. The patent discloses that the separation distance, defined as the boundaries of the region where the cell catholyte resides, is less than 400 µm.

Meanwhile, there is still a need to solve the problem of the reduced cycle life of the battery caused by using lithium metal as a negative electrode. The reason for the cycle life deterioration is that as the charging/discharging cycles are repeated, dendrite that is formed from the deposition of metal lithium at the surface of the lithium negative electrode grows and reaches to the surface of the positive electrode so that it causes a short circuit. In addition, the lithium corrosion due to a reaction of the lithium surface and the electrolyte occurs to reduce the battery capacity.

In order to solve these problems, U.S. Patent Nos. 6,017,651, 6,025,094, and 5,961,672 disclose a technique of forming a protective layer on the surface of the lithium electrode. The requirements for the protective layer to work well are the free transfer of the lithium ions and the inhibition of contact between the lithium and the electrolyte. However, the conventional methods of forming the protective layer have some problems. Most of the lithium protective layers are formed by the reaction of an additive in the electrolyte and the lithium after fabricating a battery. However, since this method does not form a dense layer, a lot of the electrolyte permeates the protective layer and contacts the lithium metal.

Also, another conventional method includes forming a lithium nitride (Li₃N) layer on the surface of the lithium by reacting nitrogen plasma at the surface of lithium. However, this method also has problems in that the electrolyte permeates through the grain boundary, the lithium nitride layer is likely to decompose due to moisture, and the potential window is very low (0.45V) so that it is difficult to use practically.

### SUMMARY OF THE INVENTION

To solve the above and other problems, it is an object of the present invention to provide an electrolyte for a lithium-sulfur battery prepared by mixing a solvent having a high dielectric constant and a solvent having a low viscosity in order to improve a cycle life characteristic and a capacity characteristic of the lithium-sulfur battery.

It is another object of the present invention to provide a lithium-sulfur battery using the electrolyte.

Additional objects and advantages of the invention will be set forth in part in the description which follows and, in part, will be obvious from the description, or may be learned by practice of the invention.

In order to achieve the above and other objects, an electrolyte for a lithium-sulfur battery according to an embodiment of the present invention includes a first solvent having a dielectric constant greater than or equal to 20, a second solvent having a viscosity less than or equal to 1.3, and an electrolyte salt.

### DETAILED DESCRIPTION OF THE PREFERRED EMBODIMENTS

Reference will now be made in detail to the present preferred embodiments of the present invention, examples of which are described. The embodiments are described below in order to explain the present invention by referring to the examples.

Generally, since a lithium-sulfur battery uses a sulfur-based compound such as active sulfur (S₈), lithium sulfide (Li₂S), and lithium polysulfide (Li₂Sₙ, n=2, 4, 6, or 8) as a positive active material, an electrolyte should be a solvent that dissolves these positive active materials well.

As the charging/discharging cycles of lithium-sulfur battery repeat, among the sulfur-based compounds described above, sulfur has a low polarity. However, lithium sulfide and lithium polysulfide are ionic compounds and have a high polarity. Thus, it is important to select a proper solvent to dissolve these sulfur-based compounds well.

In addition, since the electrolyte should have excellent high-temperature and low-temperature characteristics, the freezing point should be low, and the boiling point should be high as well as having excellent solubility to lithium salt and ion-conductivity.

Generally, since it is difficult to find a single solvent satisfying all of the above requirements, a mixed solvent comprising 2 to 4 kinds of solvents is usually used. In the present invention, a solvent having a high dielectric constant and a solvent having a low viscosity are mixed. It is preferable to use a first solvent having a dielectric constant that is greater than or equal to 20, and a second solvent having a viscosity that is less than or equal to 1.3.

The first solvent having the high dielectric constant has a high polarity so that it can dissolve an ionic compound, such as lithium sulfide (Li₂S) or lithium polysulfide (Li₂Sₙ, n=2, 4, 6, 8). For example, it is preferable to use at least one solvent selected from the group consisting of ethylene carbonate, propylene carbonate, dimethyl sulfoxide, sulforane, γ-butyrolactone, acetonitrile, dimethyl formamide, methanol, hexamethyl phosphoramide, ethanol and isopropanol.

Since the first solvent, which has the high dielectric constant, is very viscous, the present invention uses a second solvent having a viscosity that is less than or equal to 1.3to counter this high viscosity. An example of this second solvent is one selected from the group consisting of methylethyl ketone, pyridine, methyl formate, tetrahydrofurane, diglyme (2-methoxyethyl ether), 1,3-dioxolane, methyl acetate, 2-methyl tetrahydrofurane, ethyl acetate, n-propyl acetate, ethyl propionate, methyl propionate, ethyl ether, diethyl carbonate, methylethyl carbonate, dimethyl carbonate, toluene, fluorotoluene, 1,2-dimethoxy ethane, benzene, fluorobenzene, p-dioxane and cyclohexane.

It is preferable to use roughly between 20% and 80% by volume of the first solvent having the high dielectric constant and roughly between 20% and 80% by volume of the second solvent having the low viscosity. It is preferable to be within the above ranges in order to improve the electrolyte characteristic. For example, since the first solvent having the high dielectric constant is very viscous, if more than 80% by volume is used, the discharge capacity abruptly decreases. Also, since the first solvent has the high polarity, it is not likely to impregnate in a separator with low polarity. The difficulty of the impregnation may also reduce the discharge capacity in the case that the first solvent is used with more than 80% by volume.

The solvent used in the electrolyte of the present invention is selected in terms of viscosity and dielectric constant. When a solvent has a dielectric constant that is greater than 20, it has a high polarity and thus it becomes a very good electrolyte, but it has a disadvantage of a high viscosity. When a solvent has a viscosity that is less than 1.3, it does not have quite the high polarity, but it has an advantage of the low viscosity. Thus, it is not preferable to use excessively one of these solvents, and it is preferable to use them in the ratio of 1:1.

The electrolyte of the present invention includes electrolyte salts. Examples of the electrolyte salts are hexafluorophosphate (LiPF₆), lithium tetrafluoroborate (LiBF₄), lithium hexafluoroarsenate (LiAsF₆), lithium perchlorate (LiClO₄), lithium trifluoromethane sulfonyl imide (LiN(CF₃SO₂)₂), and lithium trifluorosulfonate (CF₃SO₃Li) and not limited to these. The concentration of the electrolyte salt is preferably about 0.5 to about 2.0 M.

Meanwhile, in the present invention, it is possible to improve the cycle life of lithium-sulfur battery by further adding an additive that forms a solid electrolyte interface (SEI) on the surface of a negative electrode. The additive is selected from the group consisting of vinylene carbonate, vinylene trithiocarbonate, ethylene trithiocarbonate, ethylene sulfite, ethylene sulfide and bismuth carbonate. The amount of the additive is preferably roughly between 0.2% and 10% by weight based on the electrolyte. When the amount of the additive is less than 0.2% by weight, its addition has little effect. When the amount of the additive is more than 10% by weight, the cost of the additive is high and the effect does not further improve.

In a lithium-sulfur battery, during charging/discharging, one of factors affecting the cycle life is a formation of dendrite on the surface of lithium metal of the negative electrode. As the charging/discharging cycles repeat, the dendrite is formed on the surface of the lithium metal, which causes a short circuit and reduces the cycle life. The additive in the electrolyte of the present invention prevents the formation of the dendrite, accelerates the formation of the SEI film on the surface of the negative electrode, and thus improves the cycle life of the batteries. That is, during the charging/discharging, the electrolyte decomposes on the negative electrode to form the SEI film, which prevents the formation of the dendrite and the side-reactions on the surface of the negative electrode so that it improves the cycle life.

The present invention provides a lithium-sulfur battery comprising the above electrolyte. Examples of the negative active material of the lithium-sulfur battery of the present invention area lithium metal, a lithium-containing alloy, a combination electrode of lithium/inactive sulfur, a compound that can reversibly intercalate a lithium ion, and a compound that can reversibly redoxidate (i.e., have an reduction/oxidation reaction) with the lithium ion at the lithium surface.

The lithium-containing alloy is a lithium/aluminum alloy or a lithium/tin alloy. During the charging/discharging, the sulfur used as a positive active material turns to an inactive sulfur and it can adhere to the surface of the lithium negative electrode. The inactive sulfur refers to a sulfur that cannot participate in the electrochemical reaction of the positive electrode any longer after various electrochemical or chemical reactions. The inactive sulfur formed on the surface of the lithium negative electrode has a benefit as a protective layer for the lithium negative electrode. Thus, the combination electrode of the lithium metal and the inactive sulfur formed on the lithium metal can be used as a negative electrode. The compound that can reversibly intercalate lithium ion is carbon material and any carbon negative active material generally used in a lithium ion secondary battery can be used. Examples of this include crystalline carbon, amphorous carbon or combination thereof. The compound that can reversibly redoxidate with a lithium ion is titanium nitrate or silicon compound, but is not limited to these.

The positive active material of the lithium-sulfur battery of the present invention is one selected from the group consisting of a sulfur element, Li₂Sₙ(n≥1), Li₂Sₙ(n≥1) dissolved in a catholyte, an organic sulfur compound, and a carbon-sulfur polymer ((C₂Sₓ)ₙ where x= 2.5 to 50 and n≥2).

The present invention is further explained in more detail with reference to the following examples. These examples, however, should not in any sense be interpreted as limiting the scope of the present invention or their equivalents.

### Examples 1 to 4 and Comparative Example 1

60% of an elemental sulfur, 20% of a super P conductive material, and 20% of a poly(vinyl acetate) were mixed in an acetonitrile solvent until a slurry was evenly mixed. The slurry was coated on an Al current collector coated with carbon. Before fabricating the coated positive electrode, it was dried for more than 12 hours under vacuum. The positive electrode and a vacuum-dried separator were transferred to a glove box. A proper amount of an electrolyte comprising 1 M of LiSO₃CF₃ as a salt was placed on the positive electrode. The separator was placed on the positive electrode, a small amount of the electrolyte was added, and the lithium electrode was placed thereon. After staying 24 hours at room temperature, the fabricated batteries underwent a charging/discharging 1 cycle at 0.1C, 3 cycles at 0.2C, 5 cycles at 0.5C, and 100 cycles at 1.0C under 1.5 V to 2.8V of cut-off voltage. The composition of electrolyte and the result of charging/discharging cycle are shown in Table 1.

**Table 1**

| | Electrolyte (ratio) | Cycle life characteristic (100cycles/initial) % | Initial discharge capacity (mAh/g) |
|---|---|---|---|
| Example 1 | Sulforane/toluene (40/60) | 52% | 612 |
| Example 2 | Sulforane/n-propyl acetate (40/60) | 56% | 612 |
| Example 3 | Ethylene carbonate/dimethoxy ethane (40/60) | 55% | 617 |
| Example 4 | Propylene carbonate/2-methyl tetrahydrofurane (50/50) | 63% | 625 |
| Com. Example 1 | 1,3-dioxolane/diglyme/ sulforane/dimethoxy ethane (50/20/10/20) | 44% | 571 |

Comparing Examples 1 to 4 with Comparative Example 1, the initial discharge capacity of the battery prepared in Comparative Example 1 is 571 mAh/g, which is 7% to 9% lower than the initial discharge capacities of Examples 1 to 4. The cycle life characteristic of the batteries of Examples 1 to 4 is 8% to 16% higher than the cycle life characteristic of Comparative Example 1. This is because a solvent having a high dielectric constant and a high polarity increases the solubility of the lithium polysulfide generated during the discharge. In contrast, the electrolyte of Comparative Example 1 has only 10% of a high polarity solvent (sulforane) and, thus, the solubility of the lithium polysulfide generated during discharge decreases.

Comparing Example 1 with Example 2, the kind of low viscosity solvent used affects the performance of the battery. Toluene has a dielectric constant of 2.6 and, n-propyl acetate has dielectric constant of 6.0, but since n-propyl acetate has a high polarity, it has better ion conductivity. In preparing the electrolyte, the electrolyte salt dissolves well in the n-propyl acetate, but does not in the toluene.

### Examples 5 to 7 and Comparative Example 2

The batteries were fabricated according to the same method as in Examples 1 to 4, except that the electrolyte was used as in the following composition of Table 2. After staying 24 hours at room temperature, the fabricated batteries underwent a charging/discharging 1 cycle at 0.1C, 3 cycles at 0.2C, 5 cycles at 0.5C, and 100 cycles at 1.0C under 1.5 V to 2.8V of cut-off voltage. The result is shown in Table 2.

**Table 2**

| | Electrolyte (ratio) | Additive (content, wt%) | Cycle life characteristic (100cycles/initial) % | Initial discharge capacity (mAh/g) |
|---|---|---|---|---|
| Example 5 | Sulforane/toluene (40/60) | Vinylene carbonate (2 wt %) | 60% | 632 |
| Example 6 | Sulforane/toluene (40/60) | Ethylene sulfite (2 wt %) | 59% | 640 |
| Example 7 | Sulforane/toluene (40/60) | Bismuth carbonate (2 wt %) | 52% | 625 |
| Com. Example 2 | 1,3-dioxolane /diglyme/sulforane/ dimethoxy ethane (50/20/10/20) | Vinylene carbonate (2 wt %) | 55% | 568 |

Comparing Comparative Example 1 in Table 1, which does not contain the vinylene carbonate, with Comparative Example 2, which contains the vinylene carbonate, the cycle life of Comparative Example 2 (55%) improved about 11% over that of Comparative Example 1 (44%) since an SEI formed using the additive. However, the initial discharge capacity did not increase. Thus, the increase in the battery capacity is more highly affected by a composition of the electrolyte than by the addition of an additive.

Examples 5 to 7, which contain the additive and have the electrolyte composition according to the present invention, have excellent cycle life characteristic and initial capacity characteristic. This is because the additives prevent a formation of the dendrite by forming an SEI on the surface of lithium negative electrode during the charging, and prevents side-reactions at the lithium negative surface.

Therefore, the lithium-sulfur batteries using the electrolyte of the present invention have an improved initial discharge capacity and cycle life characteristic.

Although a few preferred embodiments of the present invention have been shown and described, it would be appreciated by those skilled in the art that changes may be made in this embodiment without departing from the principles and spirit of the invention, the scope of which is defined in the claims and their equivalents.

## Claims

1. An electrolyte for a lithium-sulfur battery having a positive and negative electrode, comprising:
a first solvent having a dielectric constant that is greater than or equal to 20;
a second solvent having a viscosity that is less than or equal to 1.3; and
an electrolyte salt.

2. The electrolyte for the lithium-sulfur battery of claim 1, wherein said first solvent is at least one selected from a group consisting of ethylene carbonate, propylene carbonate, dimethyl sulfoxide, sulforane, γ-butyrolactone, acetonitrile, dimethyl formamide, methanol, hexamethyl phosphoramide, ethanol and isopropanol.

3. The electrolyte for the lithium-sulfur battery of claim 1, wherein said second solvent is at least one selected from a group consisting of methylethyl ketone, pyridine, methyl formate, tetrahydrofurane, diglyme (2-methoxyethyl ether), 1,3-dioxolane, methyl acetate, 2-methyl tetrahydrofurane, ethyl acetate, n-propyl acetate, ethyl propionate, methyl propionate, ethyl ether, diethyl carbonate, methylethyl carbonate, dimethyl carbonate, toluene, fluorotoluene, 1,2-dimethoxy ethane, benzene, fluorobenzene, p-dioxane and cyclohexane.

4. The electrolyte for the lithium-sulfur battery of claim 1, wherein:
said first solvent is roughly between 20% and 80% by volume of the electrolyte, and
said second solvent is roughly between 20% and about 80% by volume of the electrolyte.

5. The electrolyte for thelithium-sulfur battery of claim 1, further comprising an additive that forms a solid electrolyte interface (SEI) at a surface of the negative electrode during charging.

6. The electrolyte for the lithium-sulfur battery of claim 5, wherein said additive is at least one selected from a group consisting of vinylene carbonate, vinylene trithiocarbonate, ethylene trithiocarbonate, ethylene sulfite, ethylene sulfide and bismuth carbonate.

7. The electrolyte for the lithium-sulfur battery of claim 5, wherein said additive is roughly between 0.2% and 10% by weight of the electrolyte.

8. The electrolyte for the lithium-sulfur battery of claim 1, wherein said electrolyte salt is at least one selected from a group consisting of lithium hexafluorophosphate (LiPF₆), lithium tetrafluoroborate (LiBF₄), lithium hexafluoroarsenate (LiAsF₆), lithium perchlorate (LiClO₄), lithium trifluoromethane sulfonyl imide (LiN(CF₃SO₂)₂), and lithium trifluorosulfonate (CF₃SO₃Li).

9. The electrolyte for the lithium-sulfur battery of claim 1, wherein a concentration of said electrolyte salt is roughly between 0.5 M and 2.0 M.

10. A lithium-sulfur battery comprising:
a negative electrode comprising a negative active material selected from a group consisting of lithium metal, lithium-containing alloy, a combination electrode of a lithium/inactive sulfur, a compound that can reversibly intercalate lithium ion, and a compound that can reversibly redoxidate with a lithium ion at a surface;
an electrolyte comprising a solvent having a dielectric constant that is greater than or equal to 20 , a solvent having a viscosity that is less than or equal to 1.3 , and an electrolyte salt; and
a positive electrode comprising a positive active material comprising at least one sulfur-based material selected from a group consisting of a sulfur element, Li₂Sₙ (n≥1), an organic sulfur compound, and a carbon-sulfur polymer ((C₂Sₓ)ₙ where x=2.5 to 50 and n≥2), and an electrically conductive material.

11. An electrolyte for a lithium-sulfur battery, comprising:
a first solvent having a polarity high enough to dissolve an ionic compound;
a second solvent having a viscosity that is less than or equal to 1.3; and
an electrolyte salt.

12. A lithium-sulfur battery comprising:
a negative electrode comprising a negative active material;
an electrolyte comprising
a first solvent having a polarity high enough to dissolve an ionic compound,
a second solvent having a viscosity that is less than or equal to 1.3, and
an electrolyte salt; and
a positive electrode comprising a positive active material.

13. The lithium-sulfur battery of claim 12, wherein the first solvent has a dielectric constant that is greater than or equal to 20.

14. The lithium-sulfur battery of claim 12, wherein the first solvent is at least one selected from a group consisting of ethylene carbonate, propylene carbonate, dimethyl sulfoxide, sulforane, γ-butyrolactone, acetonitrile, dimethyl formamide, methanol, hexamethyl phosphoramide, ethanol, and isopropanol.

15. The lithium-sulfur battery of claim 12, wherein the second solvent is at least one selected from a group consisting of methylethyl ketone, pyridine, methyl formate, tetrahydrofurane, diglyme (2-methoxyethyl ether), 1,3-dioxolane, methyl acetate, 2-methyl tetrahydrofurane, ethyl acetate, n-propyl acetate, ethyl propionate, methyl propionate, ethyl ether, diethyl carbonate, methylethyl carbonate, dimethyl carbonate, toluene, fluorotoluene, 1,2-dimethoxy ethane, benzene, fluorobenzene, p-dioxane, and cyclohexane.

16. The lithium-sulfur battery of claim 12, wherein:
the first solvent is roughly between 20% and 80% by volume of said electrolyte, and
the second solvent is roughly between 20% and about 80% by volume of said electrolyte.

17. The lithium-sulfur battery of claim 12, wherein a ratio of the first solvent to the second solvent is roughly 1 :1.

18. The lithium-sulfur battery of claim 12, wherein said electrolyte further comprises an additive that prevents the formation of dendrite on a surface of said negative electrode during charging.

19. The lithium-sulfur battery of claim 18, wherein the additive forms a solid electrolyte interface (SEI) at the surface of said negative electrode.

20. The lithium-sulfur battery of claim 18, wherein the additive is at least one selected from a group consisting of vinylene carbonate, vinylene trithiocarbonate, ethylene trithiocarbonate, ethylene sulfite, ethylene sulfide and bismuth carbonate.

21. The lithium-sulfur battery of claim 18, wherein the additive is roughly between 0.2% and 10% by weight of said electrolyte.
